# DEMANDE DE BREVET EUROPEEN

(11) **EP 3 754 893 A1**
(43) Date de publication de la demande: **23.12.2020**
(21) Numéro de dépôt: 20179428.6
(22) Date de dépôt: 11.06.2020
(51) Int. Cl.: H04L 9/00

(54) **PROTECTION D'EXÉCUTION D'ALGORITHMES DE CHIFFREMENT SYMÉTRIQUES CONTRE DES ATTAQUES PAR CANAUX AUXILIAIRES**

(30) Priorité: 17.06.2019 FR 1906485
(71) Demandeur: STMicroelectronics (Rousset) SAS, 13790 Rousset (FR)
(72) Inventeur: SARNO, Thomas, 13710 FUVEAU (FR); LINGE, Yanis, 13710 FUVEAU (FR)
(74) Mandataire: Cabinet Beaumont

(57) **Abrégé**

La présente description concerne un procédé de protection d'exécution, par un circuit électronique, d'un algorithme de chiffrement symétrique par tours d'une donnée par une clé, dans lequel :
au moins l'une parmi la donnée et la clé est masquée par au moins un masque ; et
une fonction de tour est appliquée, à chaque tour de l'algorithme de chiffrement, à la clé ou donnée masquée et audit masque,
le nombre d'applications de la fonction de tour à un élément de donnée, parmi la donnée masquée et ledit masque de donnée, étant, à chaque instant, inférieur au nombre d'applications de la fonction de tour à un élément de clé, parmi la clé masquée et ledit masque de clé.

## Description

### Domaine technique

La présente description concerne de façon générale les circuits électroniques et, plus particulièrement, les circuits exécutant des algorithmes de cryptographie symétrique. La présente description concerne plus particulièrement la protection de l'exécution d'algorithmes de chiffrement symétrique par tours contre des attaques par canaux cachés.

### Technique antérieure

Dans de nombreuses applications, des circuits électroniques mettent en œuvre des algorithmes de chiffrement, d'authentification, de calcul de signature, et, plus généralement, des algorithmes manipulant des données, dites secrètes, c'est-à-dire dont on souhaite réserver l'accès à certains utilisateurs ou circuits. Il existe notamment des algorithmes de cryptographie symétrique, ou à clé secrète, qui permettent de chiffrer et de déchiffrer des messages à l'aide d'une même clé.

On distingue, en cryptographie symétrique, des algorithmes de chiffrement par blocs et des algorithmes de chiffrement par flot. La présente description concerne plus particulièrement les algorithmes de chiffrement par tours et par blocs, par exemple des algorithmes de type AES, SM4, etc.

De nombreuses méthodes, dites attaques, existent pour tenter de découvrir ou pirater des données secrètes manipulées par ces algorithmes. Parmi ces attaques, des attaques, dites par canaux cachés, exploitent des informations telles que la consommation du circuit (attaques SPA, DPA), son rayonnement électromagnétique, etc. L'interprétation de ces informations renseigne le pirate sur la ou les données secrètes.

### Résumé de l'invention

Il existe un besoin d'améliorer la protection des données, manipulées par des algorithmes de cryptographie symétrique, contre des attaques par canaux cachés.

Un mode de réalisation pallie tout ou partie des inconvénients des procédés et circuits usuels de protection de données, manipulées par des algorithmes de cryptographie symétrique, contre des attaques par canaux cachés.

Un mode de réalisation prévoit un procédé de protection d'exécution, par un circuit électronique, d'un algorithme de chiffrement symétrique par tours d'une donnée par une clé, dans lequel :
au moins l'une parmi la donnée et la clé est masquée par au moins un masque ; et
une fonction de tour est appliquée, à chaque tour de l'algorithme de chiffrement, à la clé ou donnée masquée et audit masque,
   le nombre d'applications de la fonction de tour à un élément de donnée, parmi la donnée masquée et ledit masque de donnée, étant, à chaque instant, inférieur au nombre d'applications de la fonction de tour à un élément de clé, parmi la clé masquée et ledit masque de clé.

Selon un mode de réalisation :
la donnée et la clé sont masquées par au moins un masque ; et
la fonction de tour est appliquée, à chaque tour de l'algorithme de chiffrement, à la clé masquée, à la donnée masquée et audit masque.

Selon un mode de réalisation, ledit ou lesdits masques sont choisis de façon aléatoire.

Selon un mode de réalisation, pour un tour de même rang, le nombre d'applications de la fonction de tour à un élément de donnée parmi la donnée masquée et ledit masque de donnée est inférieur ou égal au nombre d'applications de la fonction de tour à un élément de clé parmi la clé masquée et ledit masque de clé.

Selon un mode de réalisation, la fonction de tour est, pour un tour de même rang, appliquée successivement à tous les éléments de clé puis à tous les éléments de donnée.

Selon un mode de réalisation, la fonction de tour est, pour un tour de même rang, appliquée alternativement à un élément de clé puis à un élément de donnée.

Selon un mode de réalisation, la fonction de tour utilise, à chaque tour de l'algorithme de chiffrement :
un élément de clé parmi la clé masquée et ledit masque de clé pour chiffrer un élément de donnée parmi la donnée masquée et ledit masque de donnée ; et
l'autre élément de clé parmi la clé masquée et ledit masque de clé pour chiffrer l'autre élément de donnée parmi la donnée masquée et ledit masque de donnée.

Selon un mode de réalisation, l'élément de clé utilisé pour chiffrer chaque élément de donnée est, à chaque tour de l'algorithme de chiffrement, choisi de façon aléatoire.

Selon un mode de réalisation, plusieurs entités matérielles distinctes appliquent la fonction de tour à la clé masquée, audit masque de clé, à la donnée masquée et audit masque de donnée.

Selon un mode de réalisation, les entités matérielles appliquant la fonction de tour sont, à chaque tour de l'algorithme de chiffrement, choisies de façon aléatoire.

Selon un mode de réalisation, les entités matérielles effectuent un calcul, indépendant de l'algorithme de chiffrement, lorsqu'elles n'appliquent pas la fonction de tour.

Selon un mode de réalisation, la clé est masquée par plusieurs masques de clé et la donnée est masquée par plusieurs masques de donnée.

Un mode de réalisation prévoit un circuit électronique configuré pour la mise en œuvre le procédé tel que décrit.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :

la figure 1 représente, de façon schématique, un mode de réalisation d'un circuit électronique ;

la figure 2 représente, sous forme de blocs, un schéma de principe d'exécution d'un mode de réalisation d'un algorithme de chiffrement symétrique ;

la figure 3 représente, de façon schématique, des étapes d'exécution d'un algorithme de chiffrement symétrique ;

la figure 4 représente, de façon schématique, un exemple d'un procédé de protection d'exécution d'un algorithme de chiffrement symétrique ;

la figure 5 représente, de façon schématique, un autre exemple d'un procédé de protection d'exécution d'un algorithme de chiffrement symétrique ;

la figure 6 représente, de façon schématique, un mode de mise en œuvre d'un procédé de protection d'exécution d'un algorithme de chiffrement symétrique ;

la figure 7 représente, de façon schématique, un autre mode de mise en œuvre d'un procédé de protection d'exécution d'un algorithme de chiffrement symétrique ; et

la figure 8 représente, de façon schématique, encore un autre mode de mise en œuvre d'un procédé de protection d'exécution d'un algorithme de chiffrement symétrique.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, les applications des algorithmes exécutés, ou celles des circuits les exécutant, n'ont pas été détaillées, les modes de réalisation et modes de mise en œuvre décrits étant compatibles avec les applications usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

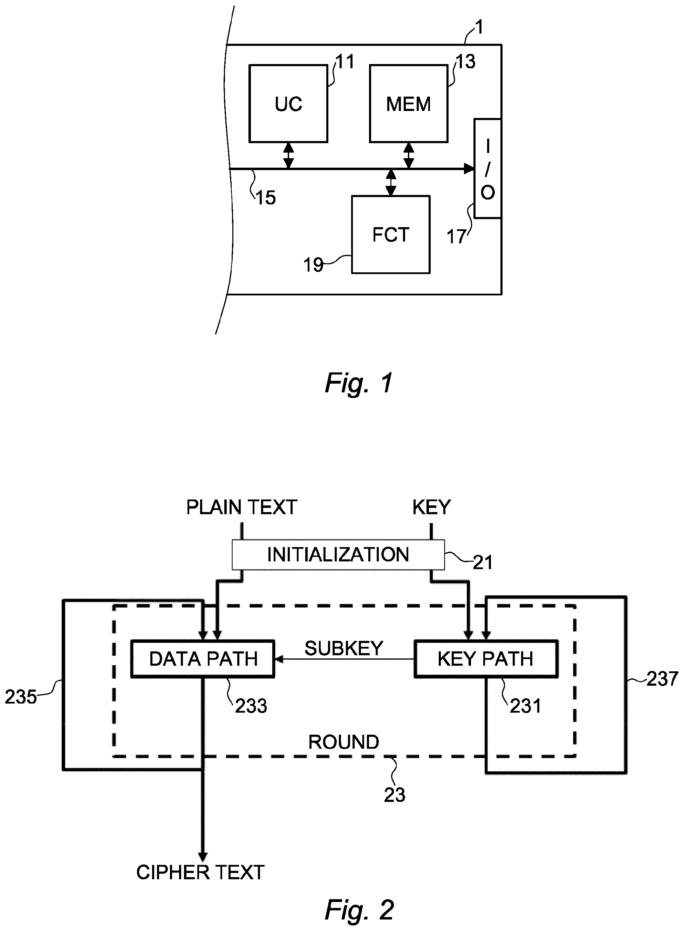

La figure 1 représente, de façon schématique, un mode de réalisation d'un circuit électronique 1.

Selon ce mode de réalisation, le circuit 1 comporte :
une entité de calcul 11 (UC), par exemple une machine d'états, un microprocesseur, un circuit logique programmable, etc. ;
une ou plusieurs zones 13 (MEM) de stockage volatil et/ou non volatil pour stocker tout ou partie de données et clés ;
un ou plusieurs bus 15 de données, d'adresses et/ou de commandes entre les différents éléments internes au circuit 1 ; et
une interface d'entrée-sortie 17 (I/O) de communication avec l'extérieur du circuit 1.

Le circuit 1 peut inclure divers autres circuits en fonction de l'application, symbolisés en figure 1 par un bloc 19 (FCT).

La figure 2 représente, sous forme de blocs, un schéma de principe d'exécution d'un mode de réalisation d'un algorithme de chiffrement symétrique.

Un algorithme de cryptographie ou chiffrement symétrique, par exemple un algorithme de chiffrement par tours et par blocs, exécuté par un circuit électronique, permet généralement de transformer un message, une donnée ou un texte en clair avec une clé secrète en vue d'obtenir un message chiffré, une donnée chiffrée ou un texte chiffré. Le circuit électronique exécutant l'algorithme de chiffrement est typiquement une machine d'états, un processeur exécutant le procédé sous forme de programme, un circuit logique programmable, etc., par exemple le circuit 1 (figure 1).

Les algorithmes de chiffrement par blocs prévoient, en général, une première étape dite d'initialisation (bloc 21, INITIALIZATION). L'étape d'initialisation permet d'effectuer des opérations préalables au chiffrement proprement dit. Dans l'exemple d'un algorithme de chiffrement par blocs, la donnée en clair (PLAIN TEXT) est typiquement, durant cette étape d'initialisation 21, découpée ou décomposée ou fractionnée en blocs d'une taille fixée (par exemple, 64 ou 128 bits). S'il se trouve que la donnée à chiffrer présente une taille qui n'est pas un multiple de la taille d'un bloc, au moins un bloc (par exemple, le dernier bloc) peut alors être complété par autant de bits ou d'octets que nécessaire. La clé secrète (KEY), employée pour le chiffrement de la donnée, est, en général, choisie ou calculée ou générée au moment de l'étape d'initialisation 21.

Une fois l'étape d'initialisation 21 achevée, on entame alors un processus de chiffrement ou traitement itératif (bloc 23, ROUND). Ce traitement itératif consiste à appliquer, à chacun des blocs constitutifs de la donnée en clair et à la clé secrète, des transformations successives. À chaque tour ou itération 23, on commence par calculer ou générer (bloc 231, KEY PATH) une sous-clé (SUBKEY) à partir de la clé secrète ou de la sous-clé de tour précédente.

Puis, on utilise cette sous-clé pour transformer ou chiffrer (bloc 233, DATA PATH) chacun des blocs constitutifs de la donnée. On obtient ainsi, en sortie d'un tour, de nouveaux blocs de taille identique à celle des blocs constitutifs de la donnée en clair. Ces nouveaux blocs sont alors réinjectés (flèche 235) dans le processus de traitement ou chiffrement, faisant ainsi office, au tour suivant, de données d'entrée pour l'application de la fonction de tour 23. De même, chaque nouvelle sous-clé est, en sortie d'un tour, réinjectée (flèche 237) pour permettre de générer la sous-clé du tour suivant.

À l'issue d'un certain nombre N de tours, les blocs obtenus par la dernière application de la fonction de tour 23 constituent le message chiffré (CIPHER TEXT) ou crypté.

En d'autres termes, l'algorithme ou processus de chiffrement symétrique par tours comporte successivement, outre l'étape d'initialisation :
un premier tour, durant lequel la fonction de tour 23 est appliquée aux blocs constitutifs de la donnée en clair et à la clé ;
un certain nombre de tours intermédiaires (N-2 tours, dans cet exemple), pour chacun desquels une nouvelle sous-clé est calculée, et durant lesquels la fonction de tour 23 est appliquée aux blocs et à la sous-clé résultant de l'application de la fonction au tour précédent ; et
un ultime tour, à l'issue duquel le traitement des blocs de donnée, par une dernière application de la fonction de tour 23, conduit à l'obtention de la donnée chiffrée.

Le nombre N de tours est également appelé nombre d'itérations. Ce nombre N de tours dépend généralement des tailles respectives des blocs et de la clé secrète. La fonction de tour 23, appliquée à chaque tour, se compose par exemple d'opérations de substitution, de décalage par ligne et de mélange par colonne suivies par une combinaison (par exemple, un OU exclusif) avec la sous-clé du tour considéré. Cette fonction de tour 23 vise typiquement à obtenir un algorithme doté de propriétés de confusion (c'est-à-dire une relation la plus complexe possible entre la clé secrète et le message en clair) et de diffusion (c'est-à-dire une dissipation, dans les statistiques du message chiffré, d'une redondance statistique du message en clair). C'est le cas typiquement d'un algorithme de type AES ou SM4.

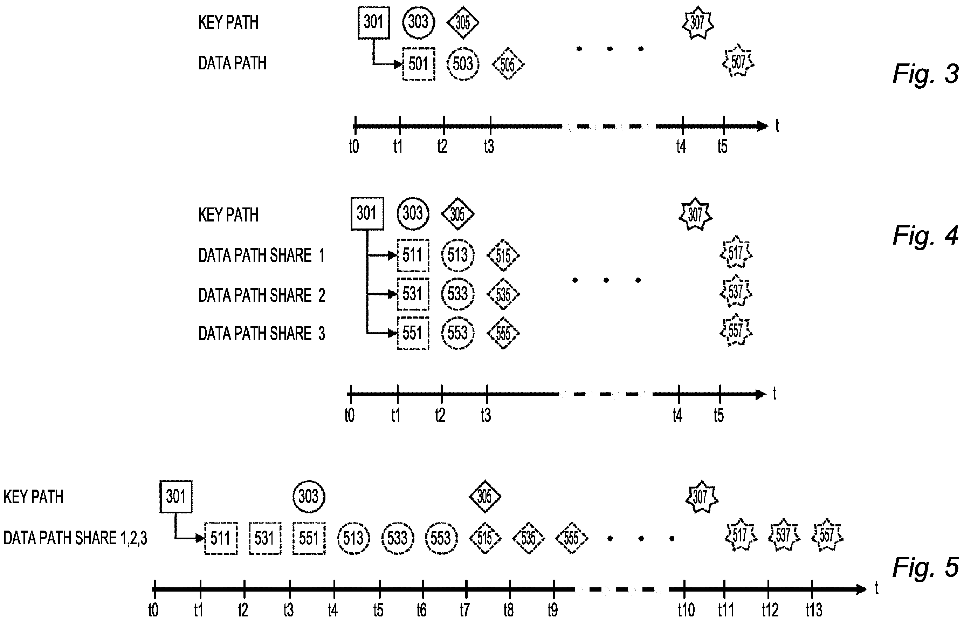

La figure 3 représente, de façon schématique, des étapes d'exécution d'un algorithme de chiffrement symétrique.

Dans l'exemple de la figure 3, on s'intéresse à un enchaînement, en fonction du temps (t), d'étapes successives d'un algorithme de chiffrement symétrique par tours, par exemple l'algorithme exposé en relation avec la figure 2. On suppose que cet algorithme de chiffrement comporte un nombre N de tours. Ces tours sont, par la suite, numérotés de 1 à N. Dans cet exemple, on ne tient pas compte de l'étape d'initialisation (21, figure 2).

En figure 3, on représente arbitrairement :
par des blocs en trait plein, formant une première ligne (KEY PATH), les applications successives de la fonction de tour à la clé secrète ; et
par des blocs en trait pointillé, formant une deuxième ligne (DATA PATH), les applications successives de la fonction de tour à la donnée en clair.

Dans l'exemple de la figure 3, chaque bloc représente ainsi une application de la fonction de tour à la clé ou aux blocs constitutifs de la donnée à chiffrer, comme exposé en relation avec la figure 2. Les applications de la fonction de tour à la clé et les applications de la fonction de tour à la donnée sont, la plupart du temps, effectuées par deux entités matérielles (non représentées) ou unités physiques différentes. En d'autres termes, une entité matérielle est allouée au calcul de la sous-clé propre à chaque tour tandis qu'une autre entité matérielle distincte est dédiée au chiffrement de la donnée.

À un instant t0 débute un premier tour de l'algorithme de chiffrement. L'entité matérielle dédiée au calcul des sous-clés applique (bloc 301) la fonction de tour à la clé secrète. On obtient ainsi une première sous-clé. L'entité matérielle dédiée au chiffrement de la donnée demeure généralement inactive durant le calcul 301 de cette première sous-clé.

À un instant t1, la fonction de tour est appliquée (bloc 501) à la donnée en clair par l'entité matérielle dédiée au chiffrement de la donnée. Cela permet ainsi d'effectuer un premier chiffrement 501 de la donnée en clair en utilisant la première sous-clé issue du calcul 301. Une fois ce premier chiffrement 501 terminé, le premier tour de l'algorithme s'achève. En parallèle à l'exécution du premier tour 501 appliqué à la donnée, un deuxième tour de l'algorithme de chiffrement débute par l'application (bloc 303) de la fonction de tour à la première sous-clé issue du calcul 301. On obtient ainsi une deuxième sous-clé.

À un instant t2, la fonction de tour est appliquée (bloc 503) à la donnée issue du premier chiffrement 501, à l'aide de la première sous-clé, de la donnée en clair. Cela permet ainsi d'effectuer un deuxième chiffrement 503 de la donnée grâce à la deuxième sous-clé issue du calcul 303. Une fois ce deuxième chiffrement 503 terminé, le deuxième tour de l'algorithme s'achève. En parallèle à l'exécution du deuxième tour 503 appliqué à la donnée, un troisième tour de l'algorithme de chiffrement débute par l'application (bloc 305) de la fonction de tour à la deuxième sous-clé issue du calcul 303. On obtient ainsi une troisième sous-clé.

À un instant t3, la fonction de tour est appliquée (bloc 505) à la donnée issue du deuxième chiffrement 503, à l'aide de la deuxième sous-clé, de la donnée. Cela permet ainsi d'effectuer un troisième chiffrement 505 de la donnée grâce à la troisième sous-clé issue du calcul 305. Une fois ce troisième chiffrement 505 terminé, le troisième tour de l'algorithme s'achève. En parallèle à l'exécution du troisième tour 505 appliqué à la donnée, un quatrième tour de l'algorithme de chiffrement débute par l'application (non représentée) de la fonction de tour à la troisième sous-clé issue du calcul 305. On obtient ainsi une quatrième sous-clé.

Les étapes d'exécution de l'algorithme de chiffrement s'enchaînent de la sorte jusqu'à un instant t4 où on calcule (bloc 307) la dernière (N-ième) sous-clé.

À un instant t5, le processus de chiffrement récursif s'achève par une ultime application (bloc 507) de la fonction de tour à la donnée. La donnée obtenue à l'issue de ce dernier chiffrement 507, grâce à la N-ième clé, constitue alors la donnée chiffrée. L'entité matérielle allouée au calcul des sous-clés demeure généralement inactive pendant la dernière application 507 de la fonction de tour à la donnée.

Dans l'exemple de la figure 3, l'enchaînement temporel des étapes de l'algorithme de chiffrement s'étend sur une durée théoriquement égale à N+1 fois le temps nécessaire à l'application de la fonction de tour à la donnée ou à la clé.

Une exécution semblable à celle qui vient d'être décrite en relation avec la figure 3 présente l'inconvénient de manipuler directement la donnée en clair lors du premier tour de l'algorithme de chiffrement. Cela rend l'exécution particulièrement vulnérable à des attaques par canaux cachés, qui peuvent permettre à un attaquant ou pirate de remonter à des informations secrètes (par exemple, la donnée en clair) manipulées par un circuit, par exemple le circuit 1 (figure 1).

La figure 4 représente, de façon schématique, un exemple d'un procédé de protection d'exécution d'un algorithme de chiffrement symétrique.

Dans l'exemple de la figure 4, la donnée en clair est d'abord masquée avant d'être chiffrée par exécution de l'algorithme. Ce masquage de la donnée en clair s'effectue, par exemple, en combinant la donnée en clair, notée X, avec deux nombres, notés R1 et R2. Les nombres R1 et R2 sont généralement choisis de façon aléatoire. Le masquage de la donnée en clair X par les nombres aléatoires R1 et R2 permet de sécuriser l'exécution de l'algorithme de chiffrement en évitant de manipuler directement la donnée en clair X.

On obtient ainsi un partage de la donnée X en trois éléments. En d'autres termes, on obtient trois éléments partiels de donnée (shares), définis arbitrairement comme suit :
une donnée masquée, notée X0, obtenue par combinaison de la donnée en clair X avec les nombres aléatoires R1 et R2 (par exemple, X0 = X XOR R1 XOR R2, où « XOR » désigne l'opérateur OU exclusif) ;
un premier masque de donnée, égal au nombre aléatoire R1 ; et
un deuxième masque de donnée, égal au nombre aléatoire R2.

On s'intéresse à une évolution temporelle des étapes d'un algorithme de chiffrement symétrique par tours, par exemple un algorithme adapté de celui décrit en relation avec la figure 2. On suppose que cet algorithme de chiffrement comporte un nombre N de tours. Ces tours sont, par la suite, numérotés de 1 à N. Dans cet exemple, on ne tient pas compte de l'étape d'initialisation (21, figure 2).

En figure 4, on représente arbitrairement :
par des blocs en trait plein, formant une première ligne (KEY PATH), les applications successives de la fonction de tour à la clé secrète ;
par des blocs en trait pointillé, formant une deuxième ligne (DATA PATH SHARE 1), les applications successives de la fonction de tour à un premier élément de donnée, par exemple la donnée masquée X0 ;
par des blocs en trait pointillé, formant une troisième ligne (DATA PATH SHARE 2), les applications successives de la fonction de tour à un deuxième élément de donnée, par exemple le premier masque R1 de donnée ; et
par des blocs en trait pointillé, formant une quatrième ligne (DATA PATH SHARE 3), les applications successives de la fonction de tour à un troisième élément de donnée, par exemple le deuxième masque R2 de donnée.

Dans l'exemple de la figure 4, chaque bloc représente ainsi une application de la fonction de tour à la clé ou aux blocs constitutifs d'un élément de donnée (parmi la donnée masquée X0 et les masques de donnée R1 et R2). Les applications de la fonction de tour à la clé et les applications de la fonction de tour à chaque élément de donnée X0, R1 et R2 sont, toujours dans cet exemple, effectuées par quatre entités matérielles différentes (non représentées). En d'autres termes, une entité matérielle est allouée au calcul de la sous-clé propre à chaque tour tandis que trois autres entités matérielles distinctes sont dédiées au chiffrement des trois éléments de donnée X0, R1 et R2. On réalise ainsi une séparation, dite séparation spatiale, au sein du circuit, de l'exécution de l'algorithme de chiffrement.

À un instant t0 débute un premier tour de l'algorithme de chiffrement. L'entité matérielle dédiée au calcul des sous-clés applique (bloc 301) la fonction de tour à la clé secrète. On obtient ainsi une première sous-clé. Les trois entités matérielles dédiées au chiffrement des éléments de donnée X0, R1 et R2 demeurent généralement inactives durant le calcul 301 de cette première sous-clé.

À un instant t1, la fonction de tour est simultanément appliquée (blocs 511, 531 et 551) à la donnée masquée X0 et aux deux masques de donnée R1 et R2 par les entités matérielles dédiées au chiffrement des éléments de donnée X0, R1 et R2. Cela permet ainsi d'effectuer des premiers chiffrements 511, 531 et 551 des éléments de donnée X0, R1 et R2 en utilisant la première sous-clé issue du calcul 301. Une fois ces premiers chiffrements 511, 531 et 551 terminés, le premier tour de l'algorithme s'achève. En parallèle à l'exécution du premier tour 511, 531 et 551 appliqué aux éléments de donnée, un deuxième tour de l'algorithme de chiffrement débute par l'application (bloc 303) de la fonction de tour à la première sous-clé issue du calcul 301. On obtient ainsi une deuxième sous-clé.

À un instant t2, la fonction de tour est simultanément appliquée (blocs 513, 533 et 553) aux éléments de donnée issus des premiers chiffrements 511, 531 et 551, à l'aide de la première sous-clé, des éléments de donnée X0, R1 et R2. Cela permet ainsi d'effectuer des deuxièmes chiffrements 513, 533 et 553 des éléments de donnée X0, R1 et R2 grâce à la deuxième sous-clé issue du calcul 303. Une fois ces deuxièmes chiffrements 513, 533 et 553 terminés, le deuxième tour de l'algorithme s'achève. En parallèle à l'exécution du deuxième tour 513, 533 et 553 appliqué aux éléments de donnée, un troisième tour de l'algorithme de chiffrement débute par l'application (bloc 305) de la fonction de tour à la deuxième sous-clé issue du calcul 303. On obtient ainsi une troisième sous-clé.

À un instant t3, la fonction de tour est simultanément appliquée (blocs 515, 535 et 555) aux éléments de donnée issus des deuxièmes chiffrements 513, 533 et 553, à l'aide de la deuxième sous-clé, des éléments de donnée. Cela permet ainsi d'effectuer des troisièmes chiffrements 515, 535 et 555 des éléments de donnée X0, R1 et R2 grâce à la troisième sous-clé issue du calcul 305. Une fois ces troisièmes chiffrements 515, 535 et 555 terminés, le troisième tour de l'algorithme s'achève. En parallèle à l'exécution du troisième tour 515, 535 et 555 appliqué aux éléments de donnée, un quatrième tour de l'algorithme de chiffrement débute par l'application (non représentée) de la fonction de tour à la troisième sous-clé issue du calcul 305. On obtient ainsi une quatrième sous-clé.

Les étapes d'exécution de l'algorithme de chiffrement se succèdent de la sorte jusqu'à un instant t4 où on calcule (bloc 307) la dernière (N-ième) sous-clé.

À un instant t5, le processus de chiffrement récursif s'achève par une ultime application simultanée (blocs 517, 537 et 557) de la fonction de tour à chaque élément de donnée X0, R1 et R2. Les éléments de donnée obtenus à l'issue de ces derniers chiffrements 517, 537 et 557, grâce à la N-ième clé, forment alors trois éléments de donnée chiffrés. L'entité matérielle allouée au calcul des sous-clés demeure généralement inactive pendant les dernières applications 517, 537 et 557 de la fonction de tour aux éléments de donnée.

On note arbitrairement, dans cet exemple :
Y0 le résultat du chiffrement 517, à l'issue des N tours de l'algorithme, de la donnée masquée X0 ;
Y1 le résultat du chiffrement 537, à l'issue des N tours de l'algorithme, du premier masque de donnée R1 ; et
Y2 le résultat du chiffrement 557, à l'issue des N tours de l'algorithme, du deuxième masque de donnée R2.

On peut alors extraire la donnée chiffrée, notée Y, à partir des trois éléments de donnée Y0, Y1 et Y2 issus du chiffrement par l'algorithme. On suppose, dans cet exemple, que la donnée masquée X0 est obtenue, à partir de la donnée en clair X, par la relation X0 = X XOR R1 XOR R2. La donnée chiffrée Y est alors obtenue à partir des éléments de donnée Y0, Y1 et Y2 en appliquant la relation suivante : Y = Y0 XOR Y1 XOR Y2.

Dans l'exemple de la figure 4, l'enchaînement temporel des étapes de l'algorithme de chiffrement s'étend sur une durée théoriquement égale à N+1 fois le temps nécessaire à l'application de la fonction de tour à un élément de donnée ou à la clé.

La figure 5 représente, de façon schématique, un autre exemple d'un procédé de protection d'exécution d'un algorithme de chiffrement symétrique.

Dans l'exemple de la figure 5, la donnée en clair est, comme dans l'exemple précédent exposé en relation avec la figure 4, d'abord masquée avant d'être chiffrée par exécution de l'algorithme. Ce masquage de la donnée en clair s'effectue, par exemple, en combinant la donnée en clair X avec les deux nombres aléatoires R1 et R2 par un opérateur OU exclusif (XOR) de manière à former la donnée masquée X0 : X0 = X XOR R1 XOR R2. On obtient ainsi les trois éléments de donnée X0, R1 et R2.

On s'intéresse à une évolution temporelle des étapes d'un algorithme de chiffrement symétrique par tours, par exemple un algorithme adapté de celui décrit en relation avec la figure 2. On suppose que cet algorithme de chiffrement comporte un nombre N de tours. Ces tours sont, par la suite, numérotés de 1 à N. Dans cet exemple, on ne tient pas compte de l'étape d'initialisation (21, figure 2).

En figure 5, on représente arbitrairement :
par des blocs en trait plein, formant une première ligne (KEY PATH), les applications successives de la fonction de tour à la clé secrète ; et
par des blocs en trait pointillé, formant une deuxième ligne (DATA PATH SHARE 1, 2, 3), les applications successives de la fonction de tour aux trois éléments de donnée X0, R1 et R2.

Dans l'exemple de la figure 5, chaque bloc représente ainsi une application de la fonction de tour à la clé ou aux blocs constitutifs des éléments de donnée X0, R1 et R2. Les applications de la fonction de tour à la clé et les applications de la fonction de tour aux éléments de donnée X0, R1 et R2 sont, toujours dans cet exemple, effectuées par deux entités matérielles différentes (non représentées). En d'autres termes, une entité matérielle est allouée au calcul de la sous-clé propre à chaque tour tandis qu'une autre entité matérielle distincte est dédiée au chiffrement des trois éléments de donnée X0, R1 et R2. On réalise ainsi une séparation, dite séparation temporelle, de l'exécution de l'algorithme de chiffrement.

À un instant t0 débute un premier tour de l'algorithme de chiffrement. L'entité matérielle dédiée au calcul des sous-clés applique (bloc 301) la fonction de tour à la clé secrète. On obtient ainsi une première sous-clé. L'entité matérielle dédiée au chiffrement des éléments de donnée X0, R1 et R2 demeure généralement inactive durant le calcul 301 de cette première sous-clé.

À un instant t1, la fonction de tour est appliquée (bloc 511) à un premier élément de donnée, par exemple la donnée masquée X0, par l'entité matérielle dédiée au chiffrement des éléments de donnée. Cela permet ainsi d'effectuer un premier chiffrement 511 de la donnée masquée X0 en utilisant la première sous-clé issue du calcul 301. L'entité matérielle allouée au calcul des sous-clés demeure généralement inactive pendant ce chiffrement 511.

À un instant t2, la fonction de tour est appliquée (bloc 531) à un deuxième élément de donnée, par exemple le premier masque de donnée R1, par l'entité matérielle dédiée au chiffrement des éléments de donnée. Cela permet ainsi d'effectuer un premier chiffrement 531 du premier masque de donnée R1 en utilisant la première sous-clé issue du calcul 301. L'entité matérielle allouée au calcul des sous-clés demeure généralement inactive pendant ce chiffrement 531.

À un instant t3, la fonction de tour est appliquée (bloc 551) à un troisième élément de donnée, par exemple le deuxième masque de donnée R2, par l'entité matérielle dédiée au chiffrement des éléments de donnée. Cela permet ainsi d'effectuer un premier chiffrement 551 du deuxième masque de donnée R2 en utilisant la première sous-clé issue du calcul 301. Une fois ces premiers chiffrements successifs 511, 531 et 551 de la donnée masquée X0, du premier masque de donnée R1 et du deuxième masque de donnée R2 terminés, le premier tour de l'algorithme s'achève. En parallèle à l'exécution du premier tour 551 appliqué au troisième élément de donnée, un deuxième tour de l'algorithme de chiffrement débute par l'application (bloc 303) de la fonction de tour à la première sous-clé issue du calcul 301. On obtient ainsi une deuxième sous-clé.

À un instant t4, la fonction de tour est appliquée (bloc 513) à l'élément de donnée issu du premier chiffrement 511, à l'aide de la première sous-clé, du premier élément de donnée (dans cet exemple, la donnée masquée X0). Cela permet ainsi d'effectuer un deuxième chiffrement 513 de la donnée masquée X0 grâce à la deuxième sous-clé issue du calcul 303. L'entité matérielle allouée au calcul des sous-clés demeure généralement inactive pendant ce chiffrement 513.

À un instant t5, la fonction de tour est appliquée (bloc 533) à l'élément de donnée issu du premier chiffrement 531, à l'aide de la première sous-clé, du deuxième élément de donnée (dans cet exemple, le premier masque de donnée R1). Cela permet ainsi d'effectuer un deuxième chiffrement 533 du premier masque de donnée R1 grâce à la deuxième sous-clé issue du calcul 303. L'entité matérielle allouée au calcul des sous-clés demeure généralement inactive pendant ce chiffrement 533.

À un instant t6, la fonction de tour est appliquée (bloc 553) à l'élément de donnée issu du premier chiffrement 551, à l'aide de la première sous-clé, du troisième élément de donnée (dans cet exemple, le deuxième masque de donnée R2) . Cela permet ainsi d'effectuer un deuxième chiffrement 553 du deuxième masque de donnée R2 grâce à la deuxième sous-clé issue du calcul 303. Une fois ces deuxièmes chiffrements 513, 533 et 553 successifs de la donnée masquée X0, du premier masque de donnée R1 et du deuxième masque de donnée R2 terminés, le deuxième tour de l'algorithme s'achève. En parallèle à l'exécution du deuxième tour 553 appliqué au troisième élément de donnée, un troisième tour de l'algorithme de chiffrement débute par l'application (bloc 305) de la fonction de tour à la deuxième sous-clé issue du calcul 303. On obtient ainsi une troisième sous-clé.

À un instant t7, la fonction de tour est appliquée (bloc 515) à l'élément de donnée issu du deuxième chiffrement 513, à l'aide de la deuxième sous-clé, du premier élément de donnée (dans cet exemple, la donnée masquée X0) . Cela permet ainsi d'effectuer un troisième chiffrement 515 de la donnée masquée X0 grâce à la troisième sous-clé issue du calcul 305. L'entité matérielle allouée au calcul des sous-clés demeure généralement inactive pendant ce chiffrement 515.

À un instant t8, la fonction de tour est appliquée (bloc 535) à l'élément de donnée issu du deuxième chiffrement 533, à l'aide de la deuxième sous-clé, du deuxième élément de donnée (dans cet exemple, le premier masque de donnée R1) . Cela permet ainsi d'effectuer un troisième chiffrement 535 du premier masque de donnée R1 grâce à la troisième sous-clé issue du calcul 305. L'entité matérielle allouée au calcul des sous-clés demeure généralement inactive pendant ce chiffrement 535.

À un instant t9, la fonction de tour est appliquée (bloc 555) à l'élément de donnée issu du deuxième chiffrement 553, à l'aide de la deuxième sous-clé, du troisième élément de donnée (dans cet exemple, le deuxième masque de donnée R2) . Cela permet ainsi d'effectuer un troisième chiffrement 555 du deuxième masque de donnée R2 grâce à la troisième sous-clé issue du calcul 305. Une fois ces troisièmes chiffrements 515, 535 et 555 successifs de la donnée masquée X0, du premier masque de donnée R1 et du deuxième masque de donnée R2 terminés, le troisième tour de l'algorithme s'achève. En parallèle à l'exécution du troisième tour 555 appliqué au troisième élément de donnée, un quatrième tour de l'algorithme de chiffrement débute par l'application (non représentée) de la fonction de tour à la troisième sous-clé issue du calcul 305. On obtient ainsi une quatrième sous-clé.

Les étapes d'exécution de l'algorithme de chiffrement s'enchaînent de la sorte jusqu'à un instant t10 où on calcule (bloc 307) la dernière (N-ième) sous-clé.

À un instant t11, le processus de chiffrement récursif du premier élément de donnée (dans cet exemple, la donnée masquée X0) s'achève par une ultime application (bloc 517) de la fonction de tour au premier élément de donnée.

À un instant t12, le processus de chiffrement récursif du deuxième élément de donnée (dans cet exemple, le premier masque de donnée R1) s'achève par une ultime application (bloc 537) de la fonction de tour au deuxième élément de donnée.

À un instant t13, le processus de chiffrement récursif du troisième élément de donnée (dans cet exemple, le deuxième masque de donnée R2) s'achève par une ultime application (bloc 557) de la fonction de tour au troisième élément de donnée.

Les éléments de donnée obtenus à l'issue de ce dernier chiffrement 557, grâce à la N-ième clé, forment alors trois éléments de donnée chiffrés. L'entité matérielle allouée au calcul des sous-clés demeure généralement inactive pendant les trois dernières applications 517, 537 et 557 de la fonction de tour aux éléments de donnée X0, R1 et R2.

On note arbitrairement, comme dans l'exemple précédent :
Y0 le résultat du chiffrement 517, à l'issue des N tours de l'algorithme, de la donnée masquée X0 ;
Y1 le résultat du chiffrement 537, à l'issue des N tours de l'algorithme, du premier masque de donnée R1 ; et
Y2 le résultat du chiffrement 557, à l'issue des N tours de l'algorithme, du deuxième masque de donnée R2.

On peut alors extraire la donnée chiffrée, notée Y, à partir des trois éléments de donnée Y0, Y1 et Y2 issus du chiffrement par l'algorithme. On suppose, toujours dans cet exemple, que la donnée masquée X0 est obtenue, à partir de la donnée en clair X, par la relation X0 = X XOR R1 XOR R2. La donnée chiffrée Y est alors obtenue à partir des éléments de donnée Y0, Y1 et Y2 en appliquant la relation suivante : Y = Y0 XOR Y1 XOR Y2.

Dans l'exemple de la figure 5, l'enchaînement temporel des étapes de l'algorithme de chiffrement s'étend sur une durée théoriquement égale à 3*N+1 fois le temps nécessaire à l'application de la fonction de tour à un élément de donnée ou à la clé.

Des exécutions semblables à celles qui viennent d'être décrites en relation avec les figures 3, 4 et 5 sont réputées vulnérables à des attaques par canaux cachés. On a vu que seule l'entité matérielle en charge du calcul des sous-clés est active au début de l'exécution de l'algorithme, la ou les entités matérielles dédiées au chiffrement de la donnée X ou des éléments de donnée X0, R1 et R2 demeurant, en général, inactives au départ. Cela est susceptible de renseigner un attaquant ou pirate sur un début d'exécution d'opérations de chiffrement au sein d'un circuit, par exemple le circuit 1 (figure 1) .

On a vu, de même, que la ou les entités matérielles en charge de l'application de la fonction de tour à la donnée X ou aux éléments de donnée X0, R1 et R2 sont notamment actives pendant l'ultime étape de l'algorithme, l'entité matérielle allouée au calcul des sous-clés demeurant, en général, inactive pendant cette étape. Cela est susceptible de renseigner un attaquant ou pirate sur une fin d'exécution d'opérations de chiffrement au sein d'un circuit, par exemple le circuit 1 (figure 1).

De manière générale, le fait que certaines entités matérielles demeurent inactives pendant que d'autres entités matérielles effectuent des calculs ou des transformations peut renseigner l'attaquant sur les opérations et/ou les données manipulées par le circuit exécutant l'algorithme de chiffrement.

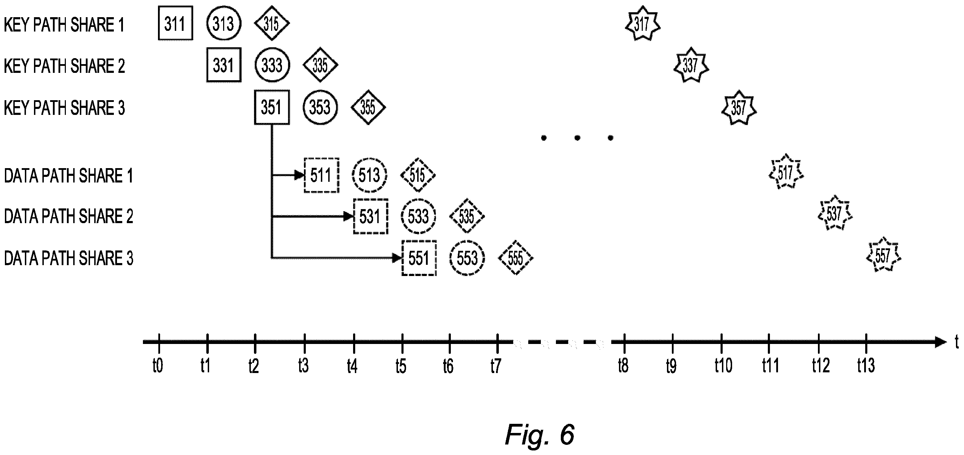

La figure 6 représente, de façon schématique, un mode de mise en œuvre d'un procédé de protection d'exécution d'un algorithme de chiffrement symétrique.

Selon ce mode de mise en œuvre, on masque non seulement la donnée (comme exposé en relation avec les figures 4 et 5), mais également la clé secrète. Ce masquage de la clé secrète s'effectue comme le masquage de la donnée. On combine, par exemple, la clé secrète, notée K, avec deux nombres, notés R3 et R4. Les nombres R3 et R4 sont de préférence choisis de façon aléatoire. Le masquage de la clé secrète par les nombres aléatoires R3 et R4 permet de sécuriser l'exécution de l'algorithme de chiffrement en évitant de manipuler directement la clé secrète K.

On obtient ainsi trois éléments de clé, définis arbitrairement comme suit :
une clé masquée, notée K0, obtenue par combinaison de la clé secrète K avec les nombres aléatoires R3 et R4 (par exemple, K0 = K XOR R3 XOR R4, où « XOR » désigne l'opérateur OU exclusif) ;
un premier masque de clé, égal au nombre aléatoire R3 ; et
un deuxième masque de clé, égal au nombre aléatoire R4.

On suppose que la donnée en clair X est également masquée par deux masques de donnée R1 et R2 aléatoires, formant ainsi une donnée masquée X0 comme exposé en relation avec les figures 4 et 5. Dans cet exemple, on applique arbitrairement deux masques à la donnée et deux masques à la clé. Cela correspond à un masquage dit « du deuxième ordre » (second order masking). On peut aussi imaginer d'autres cas dans lesquels un ou plusieurs masques sont utilisés pour masquer la donnée et/ou la clé.

On s'intéresse à une évolution temporelle des étapes d'un algorithme de chiffrement symétrique par tours, par exemple un algorithme adapté de celui décrit en relation avec la figure 2. On suppose que cet algorithme de chiffrement comporte un nombre N de tours. Ces tours sont, par la suite, numérotés de 1 à N. Dans cet exemple, on ne tient pas compte de l'étape d'initialisation (21, figure 2).

En figure 6, on représente arbitrairement :
par des blocs en trait plein, formant une première ligne (KEY PATH SHARE 1), les applications successives de la fonction de tour à un premier élément de clé, par exemple la clé masquée K0 ;
par des blocs en trait plein, formant une deuxième ligne (KEY PATH SHARE 2), les applications successives de la fonction de tour à un deuxième élément de clé, par exemple le premier masque R3 de clé ;
par des blocs en trait plein, formant une troisième ligne (KEY PATH SHARE 3), les applications successives de la fonction de tour à un troisième élément de clé, par exemple le deuxième masque R4 de clé ;
par des blocs en trait pointillé, formant une quatrième ligne (DATA PATH SHARE 1), les applications successives de la fonction de tour à un premier élément de donnée, par exemple la donnée masquée X0 ;
par des blocs en trait pointillé, formant une cinquième ligne (DATA PATH SHARE 2), les applications successives de la fonction de tour à un deuxième élément de donnée, par exemple le premier masque R1 de donnée ; et
par des blocs en trait pointillé, formant une sixième ligne (DATA PATH SHARE 3), les applications successives de la fonction de tour à un troisième élément de donnée, par exemple le deuxième masque R2 de donnée.

Dans l'exemple de la figure 6, chaque bloc représente ainsi une application de la fonction de tour à un élément de clé (parmi la clé masquée K0 et les masques de clé R3 et R4) ou aux blocs constitutifs d'un élément de donnée (parmi la donnée masquée X0 et les masques de donnée R1 et R2). Les applications de la fonction de tour à chaque élément de clé K0, R3 et R4 et les applications de la fonction de tour à chaque élément de donnée X0, R1 et R2 sont, toujours dans cet exemple, effectuées par six entités matérielles différentes (non représentées). En d'autres termes, trois entités matérielles sont allouées au calcul, partant des trois éléments de clé K0, R3 et R4, des trois sous-clés propres à chaque tour tandis que trois autres entités matérielles distinctes sont dédiées au chiffrement récursif des trois éléments de donnée X0, R1 et R2. On réalise ainsi une séparation, dite séparation spatiale, au sein du circuit, de l'exécution de l'algorithme de chiffrement.

À un instant t0 débute un premier tour de l'algorithme de chiffrement. La première entité matérielle dédiée au calcul des sous-clés applique (bloc 311) la fonction de tour à un premier élément de clé, par exemple la clé masquée K0. On obtient ainsi une première sous-clé. Les deux entités matérielles dédiées au calcul des autres sous-clés à partir des autres éléments de clé (les masques de clé R3 et R4, dans cet exemple) ainsi que les trois entités matérielles dédiées au chiffrement des éléments de donnée X0, R1 et R2 demeurent inactives durant le calcul 311 de cette première sous-clé.

À un instant t1, la deuxième entité matérielle dédiée au calcul des sous-clés applique (bloc 331) la fonction de tour à un deuxième élément de clé, par exemple le premier masque de clé R3. On obtient ainsi une deuxième sous-clé. En parallèle à l'exécution du calcul 331, un deuxième tour de l'algorithme de chiffrement débute par l'application (bloc 313) de la fonction de tour à la première sous-clé issue du calcul 311. On obtient ainsi une troisième sous-clé. La troisième entité matérielle dédiée au calcul de la sous-clé à partir du troisième élément de clé (le deuxième masque de clé R4, dans cet exemple) ainsi que les trois entités matérielles dédiées au chiffrement des éléments de donnée X0, R1 et R2 demeurent inactives durant le calcul 331 de cette deuxième sous-clé et le calcul 313 de cette troisième sous-clé.

À un instant t2, la troisième entité matérielle dédiée au calcul des sous-clés applique (bloc 351) la fonction de tour à un troisième élément de clé, par exemple le deuxième masque de clé R4. On obtient ainsi une quatrième sous-clé. En parallèle à l'exécution du calcul 351, la deuxième entité matérielle dédiée au calcul des sous-clés applique (bloc 333) la fonction de tour à un deuxième élément de clé (le premier masque de clé R3, dans cet exemple). On obtient ainsi une cinquième sous-clé. En parallèle à l'exécution des calculs 351 et 333, un troisième tour de l'algorithme de chiffrement débute par l'application (bloc 315) de la fonction de tour à la troisième sous-clé issue du calcul 313. On obtient ainsi une sixième sous-clé. Les trois entités matérielles dédiées au chiffrement des éléments de donnée X0, R1 et R2 demeurent inactives durant les calculs 351, 333 et 315 de ces quatrième, cinquième et sixième sous-clés, respectivement.

À un instant t3, la fonction de tour est appliquée (bloc 511) à un premier élément de donnée, par exemple la donnée masquée X0, par l'entité matérielle dédiée au chiffrement du premier élément de donnée. Cela permet ainsi d'effectuer un premier chiffrement 511 de la donnée masquée X0 en utilisant, par exemple, la première sous-clé issue du calcul 311. En parallèle à l'exécution du chiffrement 511, la troisième entité matérielle dédiée au calcul des sous-clés applique (bloc 353) la fonction de tour à la quatrième sous-clé issue du calcul 351. On obtient ainsi une septième sous-clé. En parallèle à l'exécution du chiffrement 511 et du calcul 353, la deuxième entité matérielle dédiée au calcul des sous-clés applique (bloc 335) la fonction de tour à la cinquième sous-clé issue du calcul 333. On obtient ainsi une huitième sous-clé. Les deux entités matérielles dédiées au chiffrement des autres éléments de donnée (les masques de donnée R1 et R2, dans cet exemple) demeurent inactives durant le chiffrement 511 et les calculs 353 et 335.

À un instant t4, la fonction de tour est appliquée (bloc 531) à un deuxième élément de donnée, par exemple le premier masque de donnée R1, par l'entité matérielle dédiée au chiffrement du deuxième élément de donnée. Cela permet ainsi d'effectuer un premier chiffrement 531 du premier masque de donnée R1 en utilisant, par exemple, la deuxième sous-clé issue du calcul 331. En parallèle à l'exécution du chiffrement 531, la fonction de tour est appliquée (bloc 513) à l'élément de donnée issu du premier chiffrement 511, à l'aide de la première sous-clé, du premier élément de donnée (dans cet exemple, la donnée masquée X0). Cela permet ainsi d'effectuer un deuxième chiffrement 513 de la donnée masquée X0 en utilisant, par exemple, la troisième sous-clé issue du calcul 313. En parallèle à l'exécution des chiffrements 531 et 513, la troisième entité matérielle dédiée au calcul des sous-clés applique (bloc 355) la fonction de tour à la septième sous-clé issue du calcul 353. On obtient ainsi une neuvième sous-clé. La troisième entité matérielle dédiée au chiffrement du troisième élément de donnée (le deuxième masque de donnée R2, dans cet exemple) demeure inactive durant les chiffrements 531 et 513 et le calcul 355.

À un instant t5, la fonction de tour est appliquée (bloc 551) à un troisième élément de donnée, par exemple le deuxième masque de donnée R2, par l'entité matérielle dédiée au chiffrement du troisième élément de donnée. Cela permet ainsi d'effectuer un premier chiffrement 551 du deuxième masque de donnée R2 en utilisant, par exemple, la quatrième sous-clé issue du calcul 351. En parallèle à l'exécution du chiffrement 551, la fonction de tour est appliquée (bloc 533) à l'élément de donnée issu du premier chiffrement 531, à l'aide de la deuxième sous-clé, du deuxième élément de donnée (dans cet exemple, le premier masque de donnée R1) . Cela permet ainsi d'effectuer un deuxième chiffrement 533 du premier masque de donnée R1 en utilisant, par exemple, la cinquième sous-clé issue du calcul 333. En parallèle à l'exécution des chiffrements 551 et 533, la fonction de tour est appliquée (bloc 515) à l'élément de donnée issu du deuxième chiffrement 513, à l'aide de la troisième sous-clé, du premier élément de donnée (dans cet exemple, la donnée masquée X0). Cela permet ainsi d'effectuer un troisième chiffrement 515 de la donnée masquée X0 en utilisant, par exemple, la sixième sous-clé issue du calcul 315.

À un instant t6, la fonction de tour est appliquée (bloc 553) à l'élément de donnée issu du premier chiffrement 551, à l'aide de la quatrième sous-clé, du troisième élément de donnée (dans cet exemple, le deuxième masque de donnée R2) . Cela permet ainsi d'effectuer un deuxième chiffrement 553 du deuxième masque de donnée R2 en utilisant, par exemple, la septième sous-clé issue du calcul 353. En parallèle à l'exécution du chiffrement 553, la fonction de tour est appliquée (bloc 535) à l'élément de donnée issu du deuxième chiffrement 533, à l'aide de la cinquième sous-clé, du deuxième élément de donnée (dans cet exemple, le premier masque de donnée R1). Cela permet ainsi d'effectuer un troisième chiffrement 535 du premier masque de donnée R1 en utilisant, par exemple, la huitième sous-clé issue du calcul 335.

À un instant t7, la fonction de tour est appliquée (bloc 555) à l'élément de donnée issu du deuxième chiffrement 553, à l'aide de la septième sous-clé, du troisième élément de donnée (dans cet exemple, le deuxième masque de donnée R2). Cela permet ainsi d'effectuer un troisième chiffrement 555 du deuxième masque de donnée R2 en utilisant, par exemple, la neuvième sous-clé issue du calcul 355.

Les étapes d'exécution de l'algorithme de chiffrement s'enchaînent de la sorte jusqu'à un instant t8 où débute un dernier (N-ième) tour de l'algorithme de chiffrement. La première entité matérielle dédiée au calcul des sous-clés calcule alors (bloc 317) une antépénultième sous-clé.

À un instant t9, la deuxième entité matérielle dédiée au calcul des sous-clés calcule alors (bloc 337) une avant-dernière sous-clé. La première entité matérielle dédiée au calcul des sous-clés demeure inactive durant le calcul 337 de cette avant-dernière sous-clé.

À un instant t10, la troisième entité matérielle dédiée au calcul des sous-clés calcule alors (bloc 357) une dernière sous-clé. Les deux autres entités matérielles dédiées au calcul des sous-clés demeurent inactives durant le calcul 357 de cette dernière sous-clé.

À un instant t11, la fonction de tour est appliquée (bloc 517) par l'entité matérielle dédiée au chiffrement du premier élément de donnée (la donnée masquée X0, dans cet exemple). Cela permet ainsi d'effectuer un ultime chiffrement 517 de la donnée masquée X0 en utilisant, par exemple, l'antépénultième sous-clé issue du calcul 317. Les trois entités matérielles dédiées au calcul des sous-clés demeurent inactives durant cet ultime chiffrement 517 du premier élément de donnée.

À un instant t12, la fonction de tour est appliquée (bloc 537) par l'entité matérielle dédiée au chiffrement du deuxième élément de donnée (le premier masque de donnée R1, dans cet exemple). Cela permet ainsi d'effectuer un ultime chiffrement 537 du premier masque de donnée R1 en utilisant, par exemple, l'avant-dernière sous-clé issue du calcul 337. Les trois entités matérielles dédiées au calcul des sous-clés et l'entité matérielle dédiée au chiffrement du premier élément de donnée demeurent inactives durant cet ultime chiffrement 537 du deuxième élément de donnée.

À un instant t13, la fonction de tour est appliquée (bloc 557) par l'entité matérielle dédiée au chiffrement du troisième élément de donnée (le deuxième masque de donnée R2, dans cet exemple). Cela permet ainsi d'effectuer un ultime chiffrement 557 du deuxième masque de donnée R2 en utilisant, par exemple, la dernière sous-clé issue du calcul 357. Les trois entités matérielles dédiées au calcul des sous-clés et les deux autres entités matérielles respectivement dédiées au chiffrement du premier et du deuxième élément de donnée demeurent inactives durant cet ultime chiffrement 557 du troisième élément de donnée.

Les éléments de donnée obtenus à l'issue de ce dernier chiffrement 557, grâce à la dernière clé, forment alors trois éléments de donnée chiffrés.

On note arbitrairement, comme dans l'exemple précédent :
Y0 le résultat du chiffrement 517, à l'issue des N tours de l'algorithme, de la donnée masquée X0 ;
Y1 le résultat du chiffrement 537, à l'issue des N tours de l'algorithme, du premier masque de donnée R1 ; et
Y2 le résultat du chiffrement 557, à l'issue des N tours de l'algorithme, du deuxième masque de donnée R2.

On peut alors extraire la donnée chiffrée, notée Y, à partir des trois éléments de donnée Y0, Y1 et Y2 issus du chiffrement par l'algorithme. On suppose, toujours dans cet exemple, que la donnée masquée X0 est obtenue, à partir de la donnée en clair X, par la relation X0 = X XOR R1 XOR R2. La donnée chiffrée Y est alors obtenue à partir des éléments de donnée Y0, Y1 et Y2 en appliquant la relation suivante : Y = Y0 XOR Y1 XOR Y2.

Dans l'exemple de la figure 6, l'enchaînement temporel des étapes de l'algorithme de chiffrement s'étend sur une durée théoriquement égale à N+5 fois le temps nécessaire à l'application de la fonction de tour à un élément de donnée ou à un élément de clé.

Selon ce mode de mise en œuvre, on attend d'abord d'avoir fini de calculer toutes les sous-clés propres à un tour de même rang avant de commencer à chiffrer, toujours dans ce tour, les blocs des éléments de donnée.

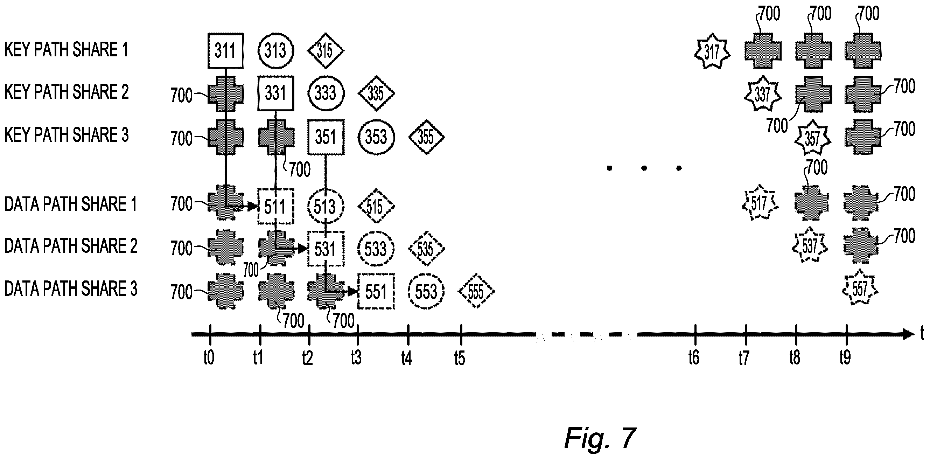

La figure 7 représente, de façon schématique, un autre mode de mise en œuvre d'un procédé de protection d'exécution d'un algorithme de chiffrement symétrique.

Le mode de mise en œuvre exposé ci-dessus en relation avec la figure 7 comprend des éléments communs avec le mode de mise en œuvre précédemment exposé en relation avec la figure 6. Ces éléments communs ne seront pas détaillés à nouveau ci-après.

Le mode de mise en œuvre exposé en relation avec la figure 7 diffère du mode de mise en œuvre exposé en relation avec la figure 6 principalement en ce que le chiffrement de chaque élément de donnée intervient, pour un tour de même rang, immédiatement après le calcul de la sous-clé associée. En d'autres termes, la fonction de tour est, pour un tour de même rang, appliquée alternativement à un élément de clé K0, R3, R4 puis à un élément de donnée X0, R1, R2.

Au premier tour de l'algorithme de chiffrement, les calculs 311, 331 et 351 des trois premières sous-clés, à partir des éléments de clé K0, R3 et R4, sont successivement effectués à des instants t0, t1 et t2. Les chiffrements 511, 531 et 551 des blocs des éléments de donnée X0, R1 et R2 interviennent alors respectivement aux instants t1 et t2 et à un instant t3. Ces chiffrements 511, 531 et 551 utilisent respectivement les sous-clés issues des calculs 311, 331 et 351.

Au deuxième tour de l'algorithme de chiffrement, les calculs 313, 333 et 353 des trois sous-clés suivantes, à partir des sous-clés respectivement issues des calculs 311, 331 et 351, sont successivement effectués aux instants t1, t2 et t3. Les chiffrements 513, 533 et 553 des blocs issus des chiffrements 511, 531 et 551 interviennent alors respectivement aux instants t2 et t3 et à un instant t4. Ces chiffrements 513, 533 et 553 utilisent respectivement les sous-clés issues des calculs 313, 333 et 353.

Au troisième tour de l'algorithme de chiffrement, les calculs 315, 335 et 355 des trois sous-clés suivantes, à partir des sous-clés respectivement issues des calculs 313, 333 et 353, sont successivement effectués aux instants t2, t3 et t4. Les chiffrements 515, 535 et 555 des blocs issus des chiffrements 513, 533 et 553 interviennent alors respectivement aux instants t3 et t4 et à un instant t5. Ces chiffrements 515, 535 et 555 utilisent respectivement les sous-clés issues des calculs 315, 335 et 355.

Les tours de l'algorithme de chiffrement s'enchaînent alors de la sorte jusqu'à un dernier (N-ième) tour de l'algorithme de chiffrement.

Les calculs 317, 337 et 357 des trois dernières sous-clés, obtenues à partir des calculs (non représentés) des sous-clés du tour précédent, sont successivement effectués à des instants t6, t7 et t8. Les chiffrements 517, 537 et 557 des blocs issus des chiffrements (non représentés) du tour précédent interviennent alors respectivement aux instants t7 et t8 et à un instant t9. Ces chiffrements 517, 537 et 557 utilisent respectivement les sous-clés issues des calculs 317, 337 et 357.

Dans l'exemple de la figure 7, l'enchaînement temporel des étapes de l'algorithme de chiffrement s'étend sur une durée théoriquement égale à N+3 fois le temps nécessaire à l'application de la fonction de tour à un élément de donnée ou à un élément de clé.

Lorsqu'une entité matérielle n'est pas mise à contribution pour calculer une sous-clé ou chiffrer des blocs de donnée, on fait en sorte, de préférence, que cette entité effectue un calcul 700 déterminé de façon arbitraire ou aléatoire. Le calcul 700 est indépendant de l'exécution de l'algorithme de chiffrement. Selon le mode de mise en œuvre de la figure 7, toutes les entités matérielles demeurent ainsi simultanément actives pendant l'intégralité de la durée d'exécution de l'algorithme de chiffrement (c'est-à-dire depuis l'instant t0 où débute le calcul 311 jusqu'à un instant (non représenté) où s'achève le dernier chiffrement 557).

Le calcul 700 permet notamment à chaque entité matérielle de maintenir une consommation électrique et un rayonnement électromagnétique sensiblement constants ou stables pendant toute la durée d'exécution de l'algorithme de chiffrement. On protège ainsi un circuit exécutant cet algorithme, par exemple le circuit 1 (figure 1), contre d'éventuelles attaques par canaux cachés.

L'exécution de l'algorithme selon le mode de mise en œuvre exposé en relation avec la figure 7 présente également l'avantage de comporter jusqu'à six exécutions simultanées, en parallèle. Cela complique grandement une tâche d'identification, par un attaquant analysant l'exécution de l'algorithme par le circuit 1, des données et/ou clés manipulées, d'autant plus que ces données et ces clés ont préalablement été masquées. Il est donc théoriquement impossible de remonter aux données et/ou clés manipulées par l'algorithme en recombinant des informations issues de l'analyse de son exécution par le circuit 1.

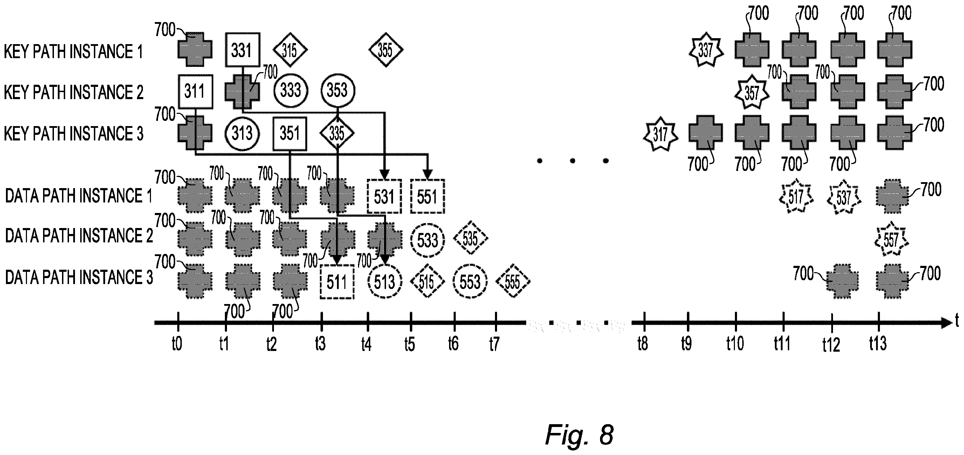

La figure 8 représente, de façon schématique, encore un autre mode de mise en œuvre d'un procédé de protection d'exécution d'un algorithme de chiffrement symétrique.

Le mode de mise en œuvre préféré, exposé ci-dessous en relation avec la figure 8, comprend des éléments communs avec le mode de mise en œuvre précédemment exposé en relation avec la figure 7. Ces éléments communs ne seront pas détaillés à nouveau ci-après.

Le mode de mise en œuvre exposé en relation avec la figure 8 diffère du mode de mise en œuvre exposé en relation avec la figure 7 principalement en ce que les entités matérielles appliquant la fonction de tour sont, à chaque tour de l'algorithme de chiffrement, choisies de façon aléatoire. En outre, l'élément de clé utilisé pour chiffrer chaque élément de donnée est, à chaque tour de l'algorithme de chiffrement, choisi de façon aléatoire. En d'autres termes, la sous-clé utilisée, à un tour de même rang, pour chiffrer un ou plusieurs blocs, issus d'un même élément de donnée X0, R1 ou R2, est aléatoirement choisie parmi les trois sous-clés issues des trois éléments de clé K0, R3 et R4.

Selon ce mode de mise en œuvre, on attend d'abord d'avoir fini de calculer toutes les sous-clés propres à un tour de même rang avant de commencer à chiffrer, toujours dans ce tour, les blocs issus des éléments de donnée X0, R1 et R2.

En figure 8, on représente arbitrairement :
par des blocs en trait plein, formant une première ligne (KEY PATH INSTANCE 1), les applications successives de la fonction de tour par une première entité matérielle dédiée au calcul des sous-clés à partir des éléments de clé ;
par des blocs en trait plein, formant une deuxième ligne (KEY PATH INSTANCE 2), les applications successives de la fonction de tour par une deuxième entité matérielle dédiée au calcul des sous-clés à partir des éléments de clé ;
par des blocs en trait plein, formant une troisième ligne (KEY PATH INSTANCE 3), les applications successives de la fonction de tour par une troisième entité matérielle dédiée au calcul des sous-clés à partir des éléments de clé ;
par des blocs en trait pointillé, formant une quatrième ligne (DATA PATH INSTANCE 1), les applications successives de la fonction de tour par une première entité matérielle dédiée au chiffrement des blocs des éléments de donnée ;
par des blocs en trait pointillé, formant une cinquième ligne (DATA PATH INSTANCE 2), les applications successives de la fonction de tour par une deuxième entité matérielle dédiée au chiffrement des blocs des éléments de donnée ; et
par des blocs en trait pointillé, formant une sixième ligne (DATA PATH INSTANCE 3), les applications successives de la fonction de tour par une troisième entité matérielle dédiée au chiffrement des blocs des éléments de donnée.

Au premier tour de l'algorithme de chiffrement, le calcul 311 de la première sous-clé est effectué, à un instant t0, par une entité matérielle dédiée au calcul des sous-clés choisie aléatoirement, par exemple la deuxième unité dédiée au calcul des sous-clés. Cette première sous-clé est, par exemple, issue de la clé masquée K0.

Le calcul 331 de la deuxième sous-clé est effectué, à un instant t1, par une entité matérielle dédiée au calcul des sous-clés choisie aléatoirement, par exemple la première unité dédiée au calcul des sous-clés. Cette deuxième sous-clé est, par exemple, issue du premier masque de clé R3.

Le calcul 351 de la troisième sous-clé est effectué, à un instant t2, par une entité matérielle dédiée au calcul des sous-clés choisie aléatoirement, par exemple la troisième unité dédiée au calcul des sous-clés. Cette troisième sous-clé est, par exemple, issue du deuxième masque de clé R4.

Le premier chiffrement 511 du premier élément de donnée, par exemple la donnée masquée X0, est alors effectué, à un instant t3, par une entité matérielle dédiée au chiffrement choisie aléatoirement, par exemple la troisième unité dédiée au chiffrement. Ce chiffrement 511 utilise une sous-clé choisie aléatoirement, par exemple la troisième sous-clé issue du calcul 351.

Le premier chiffrement 531 du deuxième élément de donnée, par exemple le premier masque de donnée R1, est alors effectué, à un instant t4, par une entité matérielle dédiée au chiffrement choisie aléatoirement, par exemple la première unité dédiée au chiffrement. Ce chiffrement 531 utilise une sous-clé choisie aléatoirement, par exemple la deuxième sous-clé issue du calcul 331.

Le premier chiffrement 551 du troisième élément de donnée, par exemple le deuxième masque de donnée R2, est alors effectué, à un instant t5, par une entité matérielle dédiée au chiffrement choisie aléatoirement, par exemple la première unité dédiée au chiffrement. Ce chiffrement 551 utilise une sous-clé choisie aléatoirement, par exemple la première sous-clé issue du calcul 311. Le premier tour de l'algorithme s'achève après le chiffrement 551.

Au deuxième tour de l'algorithme de chiffrement, le calcul 313 de la quatrième sous-clé est effectué, à l'instant t1, par une entité matérielle dédiée au calcul des sous-clés choisie aléatoirement, par exemple la troisième unité dédiée au calcul des sous-clés. Cette quatrième sous-clé est, dans cet exemple, issue de la clé masquée K0.

Le calcul 333 de la cinquième sous-clé est effectué, à l'instant t2, par une entité matérielle dédiée au calcul des sous-clés choisie aléatoirement, par exemple la deuxième unité dédiée au calcul des sous-clés. Cette cinquième sous-clé est, dans cet exemple, issue du premier masque de clé R3.

Le calcul 353 de la sixième sous-clé est effectué, à l'instant t3, par une entité matérielle dédiée au calcul des sous-clés choisie aléatoirement, par exemple la deuxième unité dédiée au calcul des sous-clés. Cette sixième sous-clé est, dans cet exemple, issue du deuxième masque de clé R4.

Le deuxième chiffrement 513 du premier élément de donnée (la donnée masquée X0, dans cet exemple) est alors effectué, à l'instant t4, par une entité matérielle dédiée au chiffrement choisie aléatoirement, par exemple la troisième unité dédiée au chiffrement. Ce chiffrement 513 utilise une sous-clé choisie aléatoirement, par exemple la sixième sous-clé issue du calcul 353.

Le deuxième chiffrement 533 du deuxième élément de donnée (le premier masque de donnée R1, dans cet exemple) est alors effectué, à l'instant t5, par une entité matérielle dédiée au chiffrement choisie aléatoirement, par exemple la deuxième unité dédiée au chiffrement. Ce chiffrement 533 utilise une sous-clé choisie aléatoirement, par exemple la quatrième sous-clé issue du calcul 313.

Le deuxième chiffrement 553 du troisième élément de donnée (le deuxième masque de donnée R2, dans cet exemple) est alors effectué, à un instant t6, par une entité matérielle dédiée au chiffrement choisie aléatoirement, par exemple la troisième unité dédiée au chiffrement. Ce chiffrement 553 utilise une sous-clé choisie aléatoirement, par exemple la cinquième sous-clé issue du calcul 333. Le deuxième tour de l'algorithme s'achève après le chiffrement 553.

Au troisième tour de l'algorithme de chiffrement, le calcul 315 de la septième sous-clé est effectué, à l'instant t2, par une entité matérielle dédiée au calcul des sous-clés choisie aléatoirement, par exemple la première unité dédiée au calcul des sous-clés. Cette septième sous-clé est, dans cet exemple, issue de la clé masquée K0.

Le calcul 335 de la huitième sous-clé est effectué, à l'instant t3, par une entité matérielle dédiée au calcul des sous-clés choisie aléatoirement, par exemple la troisième unité dédiée au calcul des sous-clés. Cette huitième sous-clé est, dans cet exemple, issue du premier masque de clé R3.

Le calcul 355 de la neuvième sous-clé est effectué, à l'instant t4, par une entité matérielle dédiée au calcul des sous-clés choisie aléatoirement, par exemple la première unité dédiée au calcul des sous-clés. Cette neuvième sous-clé est, dans cet exemple, issue du deuxième masque de clé R4.

Le troisième chiffrement 515 du premier élément de donnée (la donnée masquée X0, dans cet exemple) est alors effectué, à l'instant t5, par une entité matérielle dédiée au chiffrement choisie aléatoirement, par exemple la troisième unité dédiée au chiffrement. Ce chiffrement 515 utilise une sous-clé choisie aléatoirement, par exemple la septième sous-clé issue du calcul 315.

Le troisième chiffrement 535 du deuxième élément de donnée (le premier masque de donnée R1, dans cet exemple) est alors effectué, à l'instant t6, par une entité matérielle dédiée au chiffrement choisie aléatoirement, par exemple la deuxième unité dédiée au chiffrement. Ce chiffrement 535 utilise une sous-clé choisie aléatoirement, par exemple la neuvième sous-clé issue du calcul 355.

Le troisième chiffrement 555 du troisième élément de donnée (le deuxième masque de donnée R2, dans cet exemple) est alors effectué, à un instant t7, par une entité matérielle dédiée au chiffrement choisie aléatoirement, par exemple la troisième unité dédiée au chiffrement. Ce chiffrement 555 utilise une sous-clé choisie aléatoirement, par exemple la huitième sous-clé issue du calcul 335. Le troisième tour de l'algorithme s'achève après le chiffrement 555.

Les tours de l'algorithme de chiffrement s'enchaînent alors de la sorte jusqu'à un dernier (N-ième) tour de l'algorithme de chiffrement.

Au N-ième tour de l'algorithme de chiffrement, le calcul 317 de l'antépénultième sous-clé est effectué, à un instant t8, par une entité matérielle dédiée au calcul des sous-clés choisie aléatoirement, par exemple la troisième unité dédiée au calcul des sous-clés. Cette antépénultième sous-clé est, dans cet exemple, issue de la clé masquée K0.

Le calcul 337 de l'avant-dernière sous-clé est effectué, à un instant t9, par une entité matérielle dédiée au calcul des sous-clés choisie aléatoirement, par exemple la première unité dédiée au calcul des sous-clés. Cette avant-dernière sous-clé est, dans cet exemple, issue du premier masque de clé R3.

Le calcul 357 de la dernière sous-clé est effectué, à un instant t10, par une entité matérielle dédiée au calcul des sous-clés choisie aléatoirement, par exemple la deuxième unité dédiée au calcul des sous-clés. Cette dernière sous-clé est, dans cet exemple, issue du deuxième masque de clé R4.

Le dernier chiffrement 517 du premier élément de donnée (la donnée masquée X0, dans cet exemple) est alors effectué, à un instant t11, par une entité matérielle dédiée au chiffrement choisie aléatoirement, par exemple la première unité dédiée au chiffrement. Ce chiffrement 517 utilise une sous-clé choisie aléatoirement, par exemple l'avant-dernière sous-clé issue du calcul 337.

Le dernier chiffrement 537 du deuxième élément de donnée (le premier masque de donnée R1, dans cet exemple) est alors effectué, à un instant t12, par une entité matérielle dédiée au chiffrement choisie aléatoirement, par exemple la première unité dédiée au chiffrement. Ce chiffrement 537 utilise une sous-clé choisie aléatoirement, par exemple la dernière sous-clé issue du calcul 357.

Le dernier chiffrement 557 du troisième élément de donnée (le deuxième masque de donnée R2, dans cet exemple) est alors effectué, à un instant t13, par une entité matérielle dédiée au chiffrement choisie aléatoirement, par exemple la deuxième unité dédiée au chiffrement. Ce chiffrement 557 utilise une sous-clé choisie aléatoirement, par exemple l'antépénultième sous-clé issue du calcul 317. Le dernier tour de l'algorithme s'achève après le chiffrement 557.

Dans l'exemple de la figure 8, l'enchaînement temporel des étapes de l'algorithme de chiffrement s'étend sur une durée théoriquement égale à N+5 fois le temps nécessaire à l'application de la fonction de tour à un élément de donnée ou à un élément de clé.

Selon le mode de mise en œuvre de la figure 8, toutes les entités matérielles demeurent simultanément actives pendant l'intégralité de la durée d'exécution de l'algorithme de chiffrement (c'est-à-dire depuis l'instant t0 où débute le calcul 311 jusqu'à un instant (non représenté) où s'achève le dernier chiffrement 557). Lorsqu'une entité matérielle n'est pas mise à contribution pour calculer une sous-clé ou chiffrer des blocs de donnée, on fait en sorte, par exemple, que cette entité effectue un calcul 700 indépendant de l'exécution de l'algorithme de chiffrement. Ce calcul 700 traite par exemple une donnée quelconque, une donnée aléatoire, etc. n'intervenant pas sur le résultat du chiffrement (dummy computation). On retrouve ainsi les mêmes avantages que ceux décrits en relation avec la figure 7.

L'exécution de l'algorithme selon le mode de mise en œuvre exposé en relation avec la figure 8 présente, en outre, l'avantage d'introduire un caractère aléatoire au choix des entités matérielles utilisées pour le calcul des sous-clés et pour le chiffrement des blocs de donnée. Les sous-clés, issues des éléments de clé K0, R3 et R4 sont également utilisées de façon aléatoire pour chiffrer les données.

Cela complique grandement une tâche d'identification, par un attaquant analysant l'exécution de l'algorithme par un circuit (par exemple, le circuit 1 (figure 1)), des données et/ou clés manipulées, d'autant plus que ces données et ces clés ont préalablement été masquées. Des attaques par fautes ou des attaques par profilage (profiled attacks), comportant une phase d'apprentissage, sont ainsi très difficiles à mettre en œuvre. Il est donc théoriquement impossible de remonter aux données et/ou clés manipulées par l'algorithme en recombinant des informations issues de l'analyse de son exécution par le circuit 1.

Pour tous les modes de mise en œuvre décrits en relation avec les figures 6 à 8, on constate que le nombre d'applications de la fonction de tour à un élément de donnée X0, R1, R2 est, à chaque instant, inférieur au nombre d'applications de la fonction de tour à un élément de clé K0, R3, R4. On remarque, de même, que le nombre d'applications de la fonction de tour à un élément de donnée X0, R1, R2 est, pour un tour de même rang, systématiquement inférieur ou égal au nombre d'applications de la fonction de tour à un élément de clé K0, R3, R4. En d'autres termes, un élément de donnée ne peut pas être chiffré tant que la sous-clé utilisée pour ce chiffrement n'a pas été calculée.

Les modes de mise en œuvre décrits en relation avec les figures 6 à 8 sont compatibles avec un nombre quelconque de masques R1, R2 de donnée et de masques R3, R4 de clé, autrement dit avec un ordre de masquage quelconque. Ces modes de mise en œuvre peuvent être appliqués pour protéger de nombreux algorithmes de cryptographie, parmi lesquels les algorithmes de type AES et SM4.

Divers modes de réalisation et variantes ont été décrits. L'homme de l'art comprendra que certaines caractéristiques de ces divers modes de réalisation, modes de mise en œuvre et variantes pourraient être combinées, et d'autres variantes apparaîtront à l'homme de l'art. En particulier, le choix du nombre de masques R1, R2 de donnée, utilisés pour masquer la donnée en clair X, et du nombre de masques R3, R4 de clé, utilisés pour masquer la clé secrète K, dépend de l'application et du temps de calcul acceptable.

Enfin, la mise en œuvre pratique des modes de réalisation, modes de mise en œuvre et variantes décrits est à la portée de l'homme du métier à partir des indications fonctionnelles données ci-dessus.

## Revendications

1. Procédé de protection d'exécution, par un circuit électronique (1), d'un algorithme de chiffrement symétrique par tours d'une donnée (PLAIN TEXT ; X) par une clé (KEY ; K), dans lequel :
au moins l'une parmi la donnée (PLAIN TEXT ; X) et la clé (KEY ; K) est masquée par au moins un masque (R1, R2, R3, R4) ; et
une fonction de tour (23) est appliquée, à chaque tour de l'algorithme de chiffrement, à la clé ou donnée masquée (X0, K0) et audit masque (R1, R2, R3, R4),
le nombre d'applications de la fonction de tour (23) à un élément de donnée (X0, R1, R2), parmi la donnée masquée (X0) et ledit masque de donnée (R1, R2), étant, à chaque instant, inférieur au nombre d'applications de la fonction de tour (23) à un élément de clé (K0, R3, R4), parmi la clé masquée (K0) et ledit masque de clé (R3, R4).

2. Procédé selon la revendication 1, dans lequel :
la donnée (PLAIN TEXT ; X) et la clé (KEY ; K) sont masquées par au moins un masque (R1, R2, R3, R4) ; et
la fonction de tour (23) est appliquée, à chaque tour de l'algorithme de chiffrement, à la clé masquée (K0), à la donnée masquée (X0) et audit masque (R1, R2, R3, R4).

3. Procédé selon la revendication 1 ou 2, dans lequel ledit ou lesdits masques (R1, R2, R3, R4) sont choisis de façon aléatoire.

4. Procédé selon l'une quelconque des revendications 1 à 3, dans lequel, pour un tour de même rang, le nombre d'applications de la fonction de tour (23) à un élément de donnée (X0, R1, R2) parmi la donnée masquée (X0) et ledit masque de donnée (R1, R2) est inférieur ou égal au nombre d'applications de la fonction de tour (23) à un élément de clé (K0, R3, R4) parmi la clé masquée (K0) et ledit masque de clé (R3, R4).

5. Procédé selon la revendication 4, dans lequel la fonction de tour (23) est, pour un tour de même rang, appliquée successivement à tous les éléments de clé (K0, R3, R4) puis à tous les éléments de donnée (X0, R1, R2).

6. Procédé selon la revendication 4, dans lequel la fonction de tour (23) est, pour un tour de même rang, appliquée alternativement à un élément de clé (K0, R3, R4) puis à un élément de donnée (X0, R1, R2).

7. Procédé selon l'une quelconque des revendications 1 à 6, dans lequel la fonction de tour (23) utilise, à chaque tour de l'algorithme de chiffrement :
un élément de clé (K0, R3, R4) parmi la clé masquée (K0) et ledit masque de clé (R3, R4) pour chiffrer un élément de donnée (X0, R1, R2) parmi la donnée masquée (X0) et ledit masque de donnée (R1, R2) ; et
l'autre élément de clé (K0, R3, R4) parmi la clé masquée (K0) et ledit masque de clé (R3, R4) pour chiffrer l'autre élément de donnée (X0, R1, R2) parmi la donnée masquée (X0) et ledit masque de donnée (R1, R2).

8. Procédé selon la revendication 7, dans lequel l'élément de clé (K0, R3, R4) utilisé pour chiffrer chaque élément de donnée (X0, R1, R2) est, à chaque tour de l'algorithme de chiffrement, choisi de façon aléatoire.

9. Procédé selon l'une quelconque des revendications 1 à 8, dans lequel plusieurs entités matérielles distinctes appliquent la fonction de tour (23) à la clé masquée (K0), audit masque de clé (R3, R4), à la donnée masquée (X0) et audit masque de donnée (R1, R2).

10. Procédé selon la revendication 9, dans lequel les entités matérielles appliquant la fonction de tour (23) sont, à chaque tour de l'algorithme de chiffrement, choisies de façon aléatoire.

11. Procédé selon la revendication 9 ou 10, dans lequel les entités matérielles effectuent un calcul (700), indépendant de l'algorithme de chiffrement, lorsqu'elles n'appliquent pas la fonction de tour (23).

12. Procédé selon l'une quelconque des revendications 1 à 11, dans lequel la clé (KEY ; K) est masquée par plusieurs masques de clé (R3, R4) et la donnée (PLAIN TEXT ; X) est masquée par plusieurs masques de donnée (R1, R2).

13. Circuit électronique (1) configuré pour la mise en œuvre du procédé selon l'une quelconque des revendications 1 à 12.
